## Europäisches Patentamt

## European Patent Office

## Office européen des brevets

(11) Publication number: **0 242 894**
**B1**

# EUROPEAN PATENT SPECIFICATION

(45) Date of publication of patent specification: **23.05.90**

(51) Int. Cl.⁵: **G 01 L 9/00**

(21) Application number: **87200398.3**

(22) Date of filing: **04.03.87**

(54) Pressure sensor using optical fibres.

(30) Priority: **04.03.86 NL 8600547**

(43) Date of publication of application:
**28.10.87 Bulletin 87/44**

(45) Publication of the grant of the patent:
**23.05.90 Bulletin 90/21**

(84) Designated Contracting States:
**AT BE CH DE ES FR GB GR IT LI LU NL SE**

(56) References cited:
**NL-A-8 400 063**
**US-A-2 566 326**

**PATENT ABSTRACTS OF JAPAN, vol. 9, no. 296 (P-407)2019r, 22nd November 1985; & JP-A-60 133 336 (SHIMAZU SEISAKUSHO K.K.) 16-07-1985**

(73) Proprietor: **COENECOOP B.V.**
**Zuidelijke Dwarsweg 1b**
**NL-2741 PB Waddinxveen (NL)**

(72) Inventor: **Koster, Francois Roeland**
**Frederik Hendriklaan 240,**
**2582 BM Den Haag (NL)**

(74) Representative: **Kooy, Leendert Willem et al**
**OCTROOIBUREAU VRIESENDORP & GAADE**
**P.O. Box 266**
**NL-2501 AW The Hague (NL)**

Courier Press, Leamington Spa, England.

## Description

The present invention relates to a pressure sensor, comprising a longitudinal hollow body of elastic material, closed off by a partition, the body having two tubular portions, at least one of which is to be connected to a pressure source, the body comprising over a part of its length a number of recesses which are defined by more or less sharp, longitudinally extending edges, between which the distance changes in accordance with the pressure to be measured, and an optic fibre with a winding portion around the recesses, connected at one end with a light source and at the other end with a light meter for measuring the quantity of light from the light source transmitted through the fibre.

Such a pressure sensor is known from NL-A-84.00063, in which a similar longitudinal body has been developed with an optic fibre for determining the pressure. If, for example, this pressure sensor is used to determine pressure in an environment of highly variable temperatures, as is the case with gas exploration, the response of such a sensor might not only contain information on volume variations on account of the pressure, but it might also be affected by volume variations on account of the temperature. In order to compensate for this temperature influence that causes changes in the dimensions of the longitudinal body, the extremities of the longitudinal body are tensioned in a bow whose heat expansion differs from that of the longitudinal body in such a way that the deformation of the body is counteracted. However, this requires a precise choice of material for the bow so as to obtain a temperature expanding characteristic that is tuned to that of the longitudinal body. Apart from that, the portion of the winding around the body that attributes to the sensor's response is not clearly defined, so that measuring can be less accurate.

The present invention aims to remove these restrictions, and for that purpose is characterized by a sensor for temperature differences, comprising a second optic fibre, at one end connected to a light meter for measuring the quantity of light from the light source transmitted through the fibre, which is mounted around the recesses with at least one winding portion adjacent to one of the corresponding, tubular portions, the winding portion of the first-mentioned optic fibre being mounted about halfway around the pressurized recesses disposed at the one side of the partition, and the winding portions of the two optic fibres having been secured at the beginning and end on the corresponding edges of the recesses.

The following description of the present invention refers to the drawings.

Figure 1 is a view of a cross-section along I-I in figure 2 of the longitudinal body of elastic material at the level of the recesses, without fibre wound around the body.

Figures 2-5 represent views in perspective of various embodiments of the pressure sensor in accordance with the present invention.

Figures 6-8 represent a few diagrams of possible circuits in which the optic fibres have been incorporated.

Corresponding elements of the embodiments will be indicated in the description by the same reference numerals.

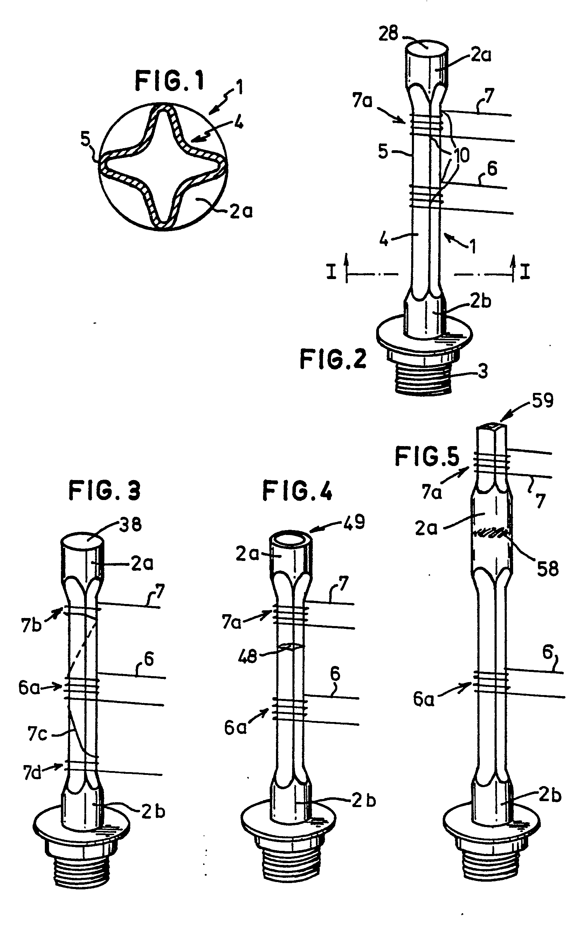

Firstly, figures 1 and 2 will be referred to.

In the cross-section of the longitudinal body 1 of elastic material in figure 1 the recesses 4 end in the tubular portions 2a and 2b. The indicated recesses 4 are defined by more or less sharp edges 5. A different number of recesses, and, accordingly, a different number of edges can be provided if required.

One can see in figure 2 that the longitudinal body 1 comprises two tubular portions 2a and 2b. The top one is closed off by a partition 28, the bottom one can, by means of an opening 3, e.g. a screw thread with pertaining sealing, be connected to a pressure source, which pressure has to be determined. An optic fibre, as e.g. the fibre 6 in figure 2, is wound around the recesses 4, for which a desired winding tension can be chosen as required. In this embodiment, the fibre portions of the winding will display kinks there where they extend over the edges 5 of the recesses 4. These kinks constitute spots where the light originating from the light source and sent into the fibre can escape; the extent to which this is effected is determined by the extent of the kink. When the longitudinal body 1 with coupling 3 is connected to a pressure source, the distances between the edges 5 of the recesses 4 will change due to pressure variations. It will then be possible to measure the kink extent from the quantity of transmitted light from the light source changing accordingly, received in a light meter, e.g. a photo cell. The pressure variation and the change in quantity of transmitted light display a linear relation to a great extent, within a 0.5% margin.

The above-described device with the single fibre 6 is part of the state of the art, as stated in NL-A-84.00063.

This pressure sensor is to be applied under circumstances in which the temperature can change varying from −20°C and +80°C. On account of that, the distances between the edges 5 of the recesses 4 will not only change due to pressure differences, but also due to temperature differences. Therefore the light to be received through fibre 6 provides more than just information on the pressure to be determined. For accurate pressure determination, however, a correction for temperature differences is necessary. This relates to both the environmental temperature and the temperature of the medium which pressure has to be determined. Since the sensor is mounted at a dead end of the pressure conduit, where the medium does not flow, and the opted material, e.g. steel, allows for a good heat contact with the environment, a temperature correction can be obtained. In the present invention this problem is solved by mounting a second fibre 7 around the recesses 4 of the longitudinal body 1 in those places, where the pressure influence is considerably smaller, particularly adjacent to a tubular portion 2a; precisely there the shape of the tubular portion 2 will still be of influence. Moreover it has appeared that the linearity margin has improved there up to 0.02%. The quantity of light then received in the photo cell through the second fibre 7, being representative for the temperature differences occurring, thus enables correction of the pressure determinations with the first fibre 6. It was found that for determining the pressure, the winding portions 6a of the first optic fibre 6 are preferably applied at the level of the middle section of the recesses 4. It has to be remarked that both the fibres are preferably connected through a beamsplitter device with the same light source. Fluctuations in light emittance, if any, then occur simultaneously in both the measuring circuits. A light-emitting diode can be used as a light source.

A factor also affecting the reliability of the measurements in both the first optic fibre 6 and the second optic fibre 7, is the length of the winding portion 6a, 7a which performs the determination. For if the distance between the recesses 4 increases, then the fibres 6, 7 could not only be kinked further, but also stretched further. For the same fibre portion to perform the determination time and again, the winding portions 6a, 7a, after having been wound around the longitudinal body 1 at the desired tension, will be secured at the beginning and end 10 on the respective edges 5, for instance by means of an adhesive.

As will be understood, it is easiest to compare and combine the output signals of both the fibres if both the fibres are wound, pre-tensioned and adhered in similar ways; the extent of electronic circuitry required for processing the signals can be thus limited. It is preferred to wind the fibres in an identical manner around the recesses 4, with a similar number of windings and a similar pre-tension. This also goes for the embodiments to be discussed hereafter.

In a second embodiment, represented in fig. 3, the accuracy of the sensor for temperature differences is further increased by winding the second fibre 7 in two portions 7b, 7d around the recesses 4 adjacent to the two tubular portions 2a, 2b on account of the improved linearity margin. The thus obtained measuring is then a measure of the average pressure variation adjacent to the tubular portion 2a, 2b. Each of the two winding portions 7b, 7d should, as indicated above, be secured. The connecting portion 7c between the two winding portions 7b, 7d will not affect the quantity of transmitted light since this portion extends substantially longitudinally and the kink strength of this portion is too small to present loss of light.

Figure 4 represents a third embodiment. Unlike the above-described embodiments in figures 2 and 3 the winding portions 7a of the optic fibre 7 has been applied adjacent to the tubular portion 2a around the recesses 4 of a part of the longitudinal body 1, located on the other side of the partition 48, and thus not connected to the pressure source which pressure has to be determined, making the sensor for temperature differences independent of the pressure in the longitudinal body 1. This tubular portion 2a is preferably open, with an opening 49, so that the sensor for temperature differences is not pressure-related at all. In accordance with the above-described method, the first optic fibre 6 is wound all but halfway at the portion of the recesses 4 connected to the pressure source for determining the pressure.

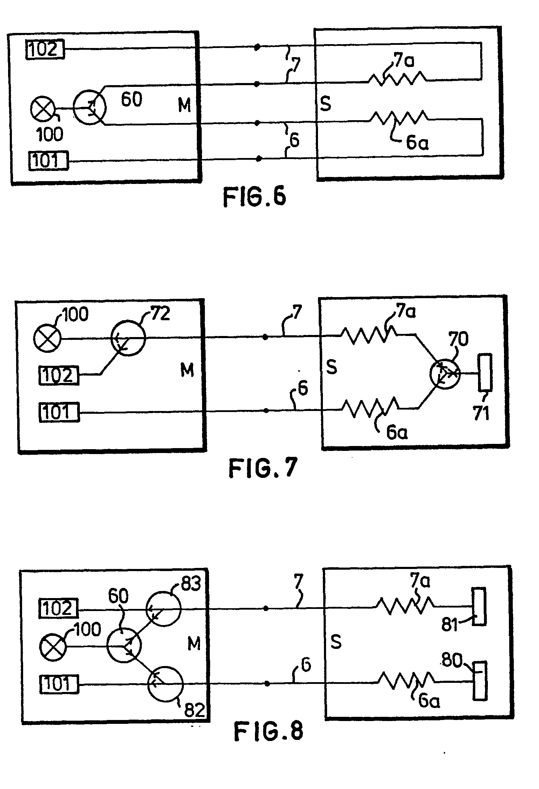

In the fourth preferred embodiment of the present invention as represented in figure 5, the winding portion 7a of the sensor for temperature differences is applied around a portion of the body 1 with recesses 4, being separated from the recesses 4, said recesses being connected to the pressure source and wound with the first optic fibre 6, by a partition 58 of suitable material within the tubular portion 2a away from the connection to the pressure source. Similar to the embodiment of figure 4, this sensor for temperature differences is also independent of the pressure in the longitudinal body, and again it can be open, with an opening 59, so that it is not pressure-related. Moreover it can be considered an advantage of this embodiment, that during production of the longitudinal body 1 and mounting the sensor, partition 58 can easily be fitted. In accordance with the above, the winding portions 6a, 7a of the two optic fibres 6, 7 are applied, pre-tensioned and secured adjacent to the other tubular portion 2a and halfway the recesses 4 connected to the pressure source, respectively.

For the above-described embodiments it holds true that the number of windings of the winding portions for both the first optic fibre 6 and the second optic fibre 7 preferably ranges between 10 and 30. For the optic fibre, multimode fibre of the known type is preferably used, with a core of quarts and a jacket of silicon glass. The fibre is coated with a synthetic material, e.g. a single layer of UV-acrylate, with which the fibre can be protected as desired and pre-tensioned around the recesses.

The above-described pressure sensor, e.g. with a length of about 10cm and, at the level of the recesses, a diameter of about 0.8cm can, based on the wall thickness of the recesses e.g. lying in the range of 0.1 and 0.5mm and the pre-tension of the fibre, be adapted to determine pressures ranging between -1 and 100 bar.

Excellent elastic and heat properties can be obtained by e.g.

manufacturing the longitudinal body from Bourdon steel.

It has already been indicated above that each optic fibre 6 and 7 is connected to a light source and a light meter, with which one single light source is sufficient. Figures 6-8 provide a few diagrams of possible circuits, in which the optical fibres 6, 7 have been incorporated.

Figure 6 shows how light from a light source 100 is split into two beams through a connector-splitter device 60. Each beam is guided via the respective fibre 6, 7 to the respective winding portion 6a, 7a and then back to the light meters 101, 102, for measuring the difference in light on account of pressure and temperature variations and for measuring the difference in light on account of the temperature change only, respectively. For clarity's sake, the diagram of the circuit is divided in two blocks S and M, for the sensor portion and the measuring portion, respectively; in connector-splitter device 60 it is indicated by arrows how the beam is split.

Figures 7 and 8 give two more embodiments of possible circuits. In these embodiments it is attained that the sensor portion S and the measuring portion M are only interconnected by two connecting points. In doing so, a clear improvement in the signal-to-noise ratio is obtained, while a simplified connection is established at the same time.

In the embodiment according to fig. 7, basically the winding portion 6a is connected to the light source 100 by mediation of the winding portion 7a. Light that has passed through winding portion 6a subsequently reaches the pertaining light meter 101. In order to measure the effect in winding portion 7a the light, before passing it to winding portion 6a, is passed via a connector-splitter device 70 to a light reversing device 71, after which it is again put through the action of the connector-splitter device 70, dividing the light over both the fibres 6 and 7. For clarity's sake the direction of the light flow in the connector-splitter device 70 is indicated by sharply pointed arrows in the forward direction and by wide arrows in the reverse direction. When passing the light back through fibre 7, it again passes a connector-splitter device 72, so that part of this light reaches the light meter 102. Although the light output is only about half of that in the circuit according to figure 6, this circuit is preferred because of its improved signal-to-noise ratio and the simplified connection between the blocks S and M. It can be remarked that the mode filtering which took place at the light transfer through the winding portion 7a for light from the light source 100 has a neglectable effect on the light that is passed partly to the winding portion 6a and partly to the winding portion 7a. On the one hand it appears that other modes are filtered in winding portion 6a, and on the other hand hardly any further mode filtering will take place when transferring back through winding portion 7a.

The beam splitter 70 can either be connected to a mirror or to an optic fibre loop such as a light reversing device 71.

In figure 8 an embodiment is shown in which the light from the light source 100 is passed through the connector-splitter device 60 in the indicated directions to the respective winding portions 6a and 7a. Every other end of the two fibres 6 and 7 is connected to a respective light reversing device 80, 81, after which the light is transferred back to the measuring portion M through said winding portions 6a and 7a. In this measuring portion the respective beams have to be split again in the respective connector-splitter devices 82 and 83 to reach the pertaining light meters 101 and 102. This circuit is also preferred to the one according to figure 6 for the same reasons as indicated in the description of figure 7. It can furthermore be remarked that the reversing devices 80 and 81 in the sensor portion S preferably are mirrors.

It will be obvious to any expert that limited changes can be made in the present invention without departing from the scope of the present invention as claimed.

**Claims**

1. Pressure sensor, comprising a longitudinal hollow body (1) of elastic material, closed off by a partition (28, 38, 48, 58), the body (1) having two tubular portions (2a, 2b), at least one of which is to be connected to a pressure source, the body (1) comprising over a part of its length a number of recesses (4) which are defined by more or less sharp, longitudinally extending edges (5), between which the distance changes in accordance with the pressure to be measured, and an optic fibre (6) with a winding portion around the recesses (4), connected at one end with a light source (100) and at the other end with a light meter (101) for measuring the quantity of light from the light source (100) transmitted through the fibre (6), characterized by a sensor for temperature differences, comprising a second optic fibre (7), at one end connected to a light meter for measuring the quantity of light from the light source transmitted through the fibre, which is mounted around the recesses (4) with at least one winding portion (7a, 7b, 7d) adjacent to one of the corresponding, tubular portions (2a, 2b), the winding portion (6a) of the first-mentioned optic fibre (6) being mounted about halfway around the pressurized recesses (4) disposed at the one side of the partition (28, 38, 48, 58), and the winding portions (6a, 7a, 7b, 7d) of the two optic fibres (6, 7) having been secured at the beginning and end (10) on the corresponding edges (5) of the recesses (4).

2. Pressure sensor according to claim 1, characterized in that the second optic fibre (7) comprises two winding portions (7b, 7d), both having been mounted close to one of the corresponding, tubular portions (2a, 2b) around the recesses at the one side of the partition (38).

3. Pressure sensor according to claim 1, characterized in that the one winding portion (7a) of the second optic fibre (7) is applied around the recesses (4) adjacent to the other tubular portion (2a) and disposed on the other side of the partition (48, 58).

4. Pressure sensor according to claim 3, characterized in that the partition (48) is enclosed by the recesses (4) disposed between the two tubular portions (2a, 2b).

5. Pressure sensor according to claim 3, characterized in that the partition (58) is enclosed by the other tubular portion (2a).

6. Pressure sensor according to claim 1, characterized in that the one end of the first optic fibre (6) is connected to the light source (100) through mediation of the second optic fibre (7) at its other end, which other end is connected to a first connector-splitter device (70) and a light reversing device (71) connected one after the other, the second optic fibre (7) being connected to the pertaining light meter (102) through mediation of a second connector-splitter device (72).

7. Pressure sensor according to claim 1, characterized in that the two optic fibres (6, 7) are connected to the respective light meters (101, 102) through mediation of respective light reversing device (80, 81) at the respective other ends, the light originating therefrom reaching the respective light meters (101, 102) through mediation of respective connector-splitter devices (82, 83).

8. Pressure sensor according to claim 6, characterized in that the light reversing device (71) comprises a looped optic fibre.

9. Pressure sensor according to any one of claims 6 or 7, characterized in that the light reversing device (71; 80, 81) comprises a mirror.

**Patentansprüche**

1. Drucksensor der mit einem mit einer Scheidewand (28, 38, 48, 58) abgeschlossenen longitudinalen hohlen Körper (1) aus elastischem Material versehen ist, wobei der Körper zwei rohrförmigen Teile (2a, 2b) hat von denen einer mit einer Druck-Quelle zu verbinden ist, wobei der Körper (1) über einen Teil seiner Länge mit einer Anzahl von Aussparungen (4) versehen ist, die durch mehr oder weniger scharfe in Längsrichtung verlaufenden Ränder (5) begrenzt werden, zwischen denen der Abstand, dem zu messenden Druck gemäss, verändert, und wobei eine optische Faser (6) mit einem Wicklungsteil rund die Aussparungen (4) an einem Ende mit einer Lichtquelle (100) und am anderen Ende mit einem Lichtmesser (101), zum Messen der von der Faser (6) durchgelassenen Lichtquantität der Lichtquelle (100), verbunden ist, gekennzeichnet durch einen Sensor für Temperaturunterschiede, der mit einer zweiten optischen Faser (7) versehen ist, die an einem Ende mit einem Lichtmesser, zum Messen der von der Faser durchgelassenen Lichtquantität der Lichtquelle, verbunden ist, welcher Sensor mit mindestens einem Wicklungsteil (7a, 7b, 7d) rund die Aussparungen (4) in der Nähe einer der übereinstimmenden, rohrförmigen Teile (2a, 2b) angeordnet ist, wobei der Wicklungsteil (6a) der erstgenannten optischen Faser (6) nahezu auf halbem Wege rund die unter Druck stehenden Aussparungen (4), die auf der einen Seite der Scheidewand (28, 38, 48, 58) gelegen sind, angeordnet ist, und wobei die Wicklungsteile (6a, 7a, 7b, 7d) der zwei optischen Fasern (6, 7) beim Anfang und Ende (10) der jeweiligen Ränder (5) der Aussparungen (4) befestigt worden sind.

2. Drucksensor nach Anspruch 1, dadurch gekennzeichnet, dass die zweite optische Faser (7) mit zwei Wicklungsteilen (7b, 7d) versehen ist, die jeder dicht in der Nähe von einem der jeweiligen rohrförmigen Teile (2a, 2b) rund die Aussparungen auf der einen Seite der Scheidewand (38) angeordnet sind.

3. Drucksensor nach Anspruch 1, dadurch gekennzeichnet, dass der eine Wicklungsteil (7a) der zweiten optischen Faser (7) rund die Aussparungen (4) in der Nähe des anderen rohrförmigen Teiles (2a) angeordnet und auf die anderen Seite der Scheidewand (48, 58) gelegen ist.

4. Drucksensor nach Anspruch 3, dadurch gekennzeichnet, dass die Scheidewand (48) durch die Aussparungen (4) die zwischen den zwei rohrförmigen Teilen (2a, 2b) gelegen sind, umschlossen ist.

5. Drucksensor nach Anspruch 3, dadurch gekennzeichnet, dass die Scheidewand (58) durch den anderen rohrförmigen Teil (2a) umschlossen ist.

6. Drucksensor nach Anspruch 1, dadurch gekennzeichnet, dass das eine Ende der ersten optischen Faser (6) mit der Lichtquelle (100) verbunden ist über Einmischung der zweiten optischen Faser (7) bei ihrem anderen Ende, welches andere Ende, mit einer ersten Kupplungs-Spaltungsvorrichtung (70) und einer Lichtumkehr-Vorrichtung (71), hintereinander geschaltet, verbunden ist, wobei die zweite optische Faser (7) durch Einmischung einer zweiten Kupplungs-Spaltungsvorrichtung (72) mit dem dazugehörenden Lichtmesser (102) verbunden ist.

7. Drucksensor nach Anspruch 1, dadurch gekennzeichnet, dass die zwei optischen Faser (6, 7) mit den jeweiligen Lichtmessern (101, 102) verbunden sind durch Einmischung einer jeweiligen Licht-Umkehrvorrichtung (80, 81) bei den jeweiligen anderen Enden, wobei das daherkommende Licht die jeweiligen Lichtmesser (101, 102) durch Einmischung der jeweiligen Kupplungs-Spaltungsvorrichtungen (82, 83) erreicht.

8. Drucksensor nach Anspruch 6, dadurch gekennzeichnet, dass die Lichtumkehrvorrichtung (71) mit einer optischen Faser versehen ist.

9. Drucksensor nach einer der Ansprüche 6 oder 7, dadurch gekennzeichnet, dass die Lichtumkehrvorrichtung (71; 80, 81) mit einem Spiegel versehen ist.

**Revendications**

1. Détecteur de pression, comprenant un corps creux longitudinal (1) en matière élastique, fermé par une cloison (28, 38, 48, 58), ledit corps (1) présentant deux éléments tubulaires (2a, 2b) dont au moins un est à connecter à une source de pression, ainsi qu'une pluralité d'enfoncements (4) sur une partie de sa longuer, délimités par des bords (5) plus ou moins aigus qui s'étendent longitudinalement et dont la distance intermédiaire change en rapport avec la pression à mesurer, et comprenant une fibre optique (6) ayant une part d'enroulement autour des enfoncements (4) et étant connectée par l'une de ses extrémités à une source lumineuse (100) et par son autre extrémité à un photomètre (101) pour mesurer la quantité de lumière issue de la source lumineuse (100) et transmise par la fibre (6), caractérisé par un détecteur de différences de température, comprenant une seconde fibre optique (7), connectée par l'une de ses extrémités à un photomètre pour mesurer la quantité de lumière issue de la source lumineuse et transmise par la fibre, montée autour des enfoncements (4) et ayant au moins une part d'enroulement (7a, 7b, 7d) adjacente à l'un des éléments tubulaires correspondants (2a, 2b), la part d'enroulement (6a) de la fibre optique (6) mentionnée en premier lieu étant montée sensiblement à mi-chemin autour des enfoncements pressurisés (4) disposés de l'un côté de la cloison (28, 38, 48, 58), et les parts d'enroulement (6a, 7a, 7b, 7d) des deux fibres optiques (6, 7) ayant été assujetties au commencement et à la fin (10) des bords correspondants (5) des enfoncements (4).

2. Détecteur de pression selon la revendication 1, caractérisé en ce que la seconde fibre optique (7) comprend deux parts d'enroulement (7b, 7d), montées toutes les deux au voisinage de l'un des éléments correspondants (2a, 2b) autour des enfoncements d'un côté de la cloison (38).

3. Détecteur de pression selon la revendication 1, caractérisé en ce que la part d'enroulement (7a) de la seconde fibre optique (7) est appliquée autour des enfoncements (4) au voisinage de l'autre élément tubulaire (2a) et disposée de l'autre côté de la cloison (48, 58).

4. Détecteur de pression selon la revendication 3, caractérisé en ce que la cloison (48) est entourée par les enfoncements (4) disposés entre les deux éléments tubulaires (2a, 2b).

5. Détecteur de pression selon la revendication 3, caractérisé en ce que la cloison (58) est entourée par l'autre élément tubulaire (2a).

6. Détecteur de pression selon la revendication 1, caractérisé en ce que l'une extrémité de la première fibre optique (6) est connectée à la source lumineuse (100) par l'intermédiaire de la seconde fibre optique (7) à son autre extrémité, laquelle autre extrémité est connectée à un premier dispositif de couplage-partage (70) et à un dispositif renverseur de lumière (71) lesquels sont connectés l'un à la suite de l'autre, la seconde fibre optique (7) étant connectée au photomètre annexe (102) par l'intermédiaire d'un second dispositif de couplage-partage (72).

7. Détecteur de pression selon la revendication 1, caractérisé en ce que les deux fibres optiques (6, 7) sont connectées aux respectifs photomètres (101, 102) par l'intermédiaire du respectif dispositif renverseur de lumière (80, 81) aux respectives autres extrémités, la lumière qui en provient atteignant les respectifs photomètres (101, 102) par l'intermédiaire de respectifs dispositifs de couplage-partage (82, 83).

8. Détecteur de pression selon la revendication 6, caractérisé en ce que le dispositif renverseur de lumière (71) comprend une fibre optique sous forme de boucle.

9. Détecteur de pression selon l'une quelconque des revendications 6 ou 7, caractérisé en ce que le dispositif renverseur de lumière (71, 80, 81) comprend un miroir.

EP  0 242 894  B1

FIG.1

FIG.2

FIG. 3

FIG.4

FIG.5

**FIG.6**

**FIG.7**

**FIG.8**